# EUROPEAN PATENT SPECIFICATION

(11) **EP 2 913 766 B1**
(45) Date of publication and mention of the grant of the patent: **25.08.2021**
(21) Application number: 14157283.4
(22) Date of filing: 28.02.2014
(51) Int. Cl.: G06F 16/90

(54) **Linking objects in databases**
Objektverknüpfung in Datenbanken
Liaison d'objets dans des bases de données

(43) Date of publication of application: 02.09.2015
(73) Proprietor: Aveva Solutions Limited, Cambridge, Cambridgeshire CB3 0HB (GB)
(72) Inventor: Campbell, Peter, Cambridge, Cambridgeshire CB4 1NZ (GB)
(74) Representative: Piotrowicz, Pawel Jan Andrzej

(56) References cited:
- US-A- 6 003 040
- US-A- 6 016 498
- US-A- 6 088 693
- US-A1- 2005 246 205
- US-A1- 2008 307 010

## Description

The present invention relates to linking objects in databases.

US 2005 0246205 A1 describes systems and methods for establishing a regional medical data exchange infrastructure, identifying patients across multiple different organizations, creating patient medical data pointers and routing tables, and generating comprehensive medical data sets for an enrolled population.

Engineering software can be used to design and implement complex installations, structures, vessels and platforms, such as process and power plants, and biofuel production plants, ships, and oil and gas platforms. Engineering software can be used not only to create and view project designs, but also to manage engineering projects.

Databases are used to store a design which can be created, modified and viewed by one or more users using a variety of software applications (herein referred to as "project tools").

Designs tend to develop incrementally and to involve multiple users sharing data. This can create a number of challenges. For example, a part of design being used or relied on by one user may be modified or deleted by another user. Conversely, a user which cannot modify part of the design may wish to ensure that other users are aware of, or can view, another related part of the design that they have created, modified or deleted.

The present invention seeks to provide an improved method of and system for allowing designs to be shared.

According to a first aspect of the present invention there is provided a method of linking first and second objects stored in first and second respective databases and for querying the database as specified in claim 1.

Thus, even though a user cannot update the first object so as to indicate that the second object is linked to the first object, they can still achieve the same result. The method comprises setting a pointer in the second object to point to the first object.

The method comprises searching for an entry, which includes a first reference identifying the first object, in another look up table stored in another, different database, for example, in a third database. The method may comprise searching for entry (entries) in a plurality of databases, for example, in all available databases.

The method may comprise downloading, from remote storage, the first and second objects and the look up table and storing, in local storage, the first and second objects and the look up table. Thus, user(s) can work using temporary, local copies of objects.

The method may further comprise, after setting the pointer in the second object and creating the entry in the look up table, uploading, to the remote storage, an updated portion of the second object and an updated portion of the look up table.

The first and second databases may be comprised in a multiple database comprising a group of linked databases. The databases may be arranged hierarchically.

The first and second objects correspond to first and second real-world elements and the linking of the first and second objects may correspond to connecting the real-world elements. For example, the first and second objects may correspond to first and second structural elements (such as framework, subframes, sections, panels and the like), equipment elements (such as nozzles, boxes, cylinders, pyramid, cones and the like) or pipe elements (such as branches, gaskets, flanges, tee-pieces, valves, bends and the like).

The pointer in the second object points to the first object using a, or the, look up table.

According to a second aspect of the present invention there is provided a computer program which, when executed by data processing apparatus (such as a workstation), causes the data processing apparatus to perform the method of the first aspect of the invention.

According to a third aspect of the present invention there is provided a computer readable medium (which may be a non-transitory computer readable medium) storing the computer program of the second aspect of the invention.

According to a fourth aspect of the present invention there is provided a computer system for linking first and second objects in first and second respective databases and for querying the database as specified in claim 11.

According to an fifth aspect of the present invention there is provided a database system comprising storage storing the first and second databases and the computer system of the fourth aspect.

Certain embodiments of the present invention will now be described, by way of example, with reference to the accompanying drawings, in which:
Figure 1 is a schematic block diagram of a project database system which includes a multiple database and workstations;
Figure 2 is a schematic block diagram of a database included in the multiple database shown in Figure 1;
Figure 3 is a schematic block diagram of an object which includes a set of attributes;
Figure 4 illustrates a simple collaborative design process;
Figure 5 illustrates a user that has different access rights to different databases;
Figure 6 is a schematic block diagram of an object and a database engine;
Figure 7 is a schematic block diagram of first and second objects, a pointer and a pseudo pointer;
Figure 8 is a process flow diagram of method of creating a link between first and second objects;
Figure 9 illustrates a database engine receiving instructions to link first and second objects;
Figure 10 illustrates a database engine adding, to a second object, a pointer to a first object;
Figure 11 illustrates a database engine adding an entry in a look up table which can be identified by a table identifier in a first object;
Figure 12 illustrates the look up table shown in Figure 11;
Figure 13 is a process flow diagram of method of establishing, by querying a first object, that the first object is linked to a second object;
Figure 14 illustrates a database engine establishing, by querying a first object, that the first object is linked to a second object;
Figure 15 illustrates linking objects in a database to a look table in the same database;
Figure 16 is a schematic block diagram of a computer system which can be used to implement a workstation as shown in Figure 1.

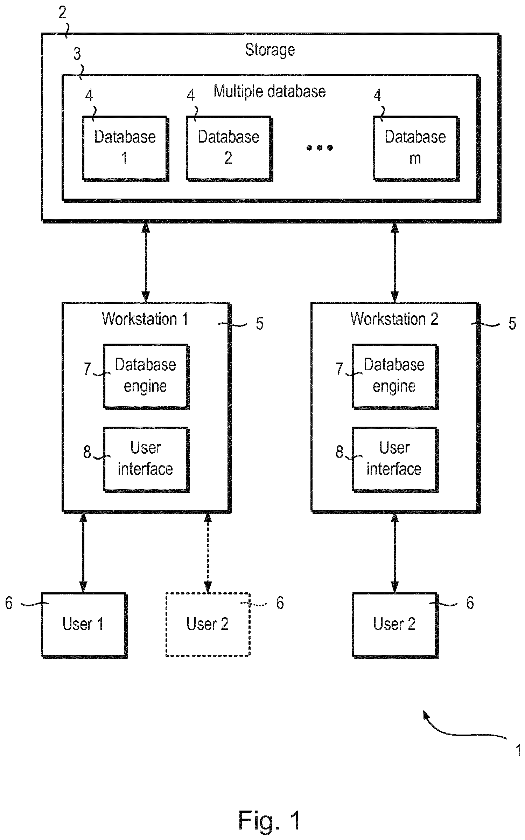

Referring to Figure 1, a project database system 1 is shown.

The system 1 includes storage 2 holding a multiple database 3 which includes a group of linked databases 4. The system 1 also includes a set of workstations 5 which allow users 6 to access the databases 4. Each workstation 5 includes a database engine 7 for navigating and accessing data in the databases 4 and a user interface 8.

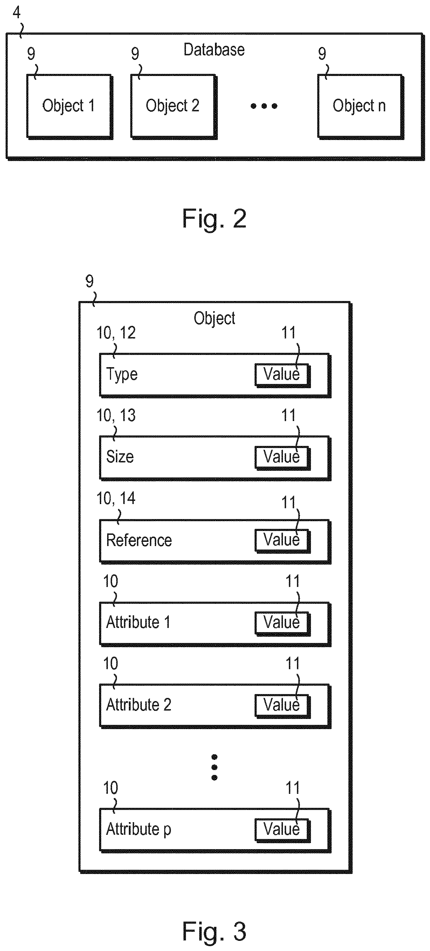

Referring also to Figures 2 and 3, each database 4 includes a set of discrete items 9 of data which are herein referred to as "elements" or "objects". An element 9 may relate to an engineering part or item, such as frame, piece of equipment, pipe or pipe. Each element 9 includes a set of attributes 10 defined and arranged according to a given schema. Each attribute 10 may contain a value 11 which can include text and/or numbers. Each attribute 10 defines a property of the element 9. A property may be, for example, a part name, a set of geometric dimensions (e.g. height, diameter, etc.), a respective value for each geometric dimension, a respective unit of measurement for each geometric dimension, part status (e.g. in stock, installed etc.), material type (e.g. stainless steel) and/or other relevant part information. Each element 9 can occupy a fixed page size, for example, 2 kB. The databases 4 and/or elements 9 contained in a database 4 are preferably arranged hierarchically. The databases 4 are not relational databases.

Each element 9 includes an attribute 12 which indicates an object type. An object type takes the form of an n-bit number (for example, n = 32). However, for simplicity, the object type is labelled herein using a letter, such as, "X" or "Y". Each element 9 includes an attribute 13 which indicates an object size (that is, memory occupied by the element 9). The object type 10 and object size 11 are preferably stored at the beginning of the element 9.

Each element 9 is identifiable by a reference attribute 14 and, optionally, a name (not shown). The reference 14 takes the form of an m-bit number (for example, m = 32). However, for simplicity, the reference is labelled herein using a simple code, such as "111/222" or "333/444" or by a descriptive name, such as "Object 1" or "Object 2".

Different users 6 can work concurrently on different aspects of a project design. For example, a structural engineer can work on structural aspects of the design, while a piping engineer can work on pipework aspects. Furthermore, more than one user 6 may work on different parts of one aspect of the design, such as pipework. Thus, different parts and/or aspects of a design may be created, modified and/or deleted at or around the same time.

Different users 6 can have different access rights (herein also referred to as "permissions") to the databases 4. A user 6 can, among other things, view, create, modify and/or delete data held in a database 4. However, a user 6 may have unlimited (or relatively unlimited) access rights including, for example write and modify rights, to one or more databases 4 (or one or more parts of one or more databases 4), and limited (or relatively limited) access rights, not including write and modify rights, to one or more other databases 4 (or one or more parts of one or more databases 4).

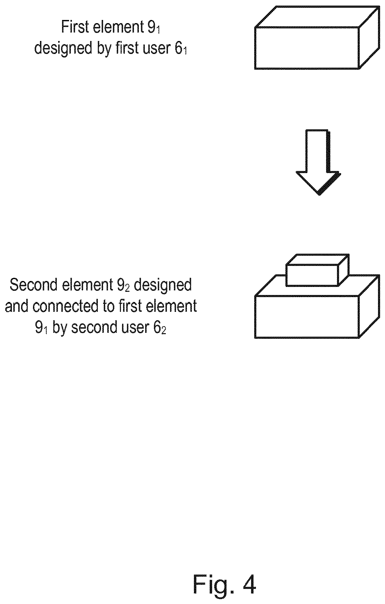

Referring also to Figure 4, the partitioned nature of project design can lead to a situation in which one user creates, modifies or deletes a part of the design which is linked to another part of the design (herein referred to as a "protected part of the design") that he or she does not have permission to modify. A first user 61 may create a first element 9₁ and a second user 62 may create a second element 9₂ which is linked to the first element. However, the second user 62 may not have permission to update the attributes 10 of the first element 9₁ in order to show that the second element 9₂ is linked to the first element 9₁ or to provide information about the nature of the link. For example, a piping engineer may connect a pipe to a vessel which has been designed or specified by another engineer. However, the piping engineer may not have permission to update the vessel design to show that the pipe is connected to the vessel or to provide information about the point of connection.

To help to try to ameliorate this drawback, each database engine 7 is each configured to allow a user 6 to link his or her element 9₂ to a protected element 9₁ by providing what appears to be a pointer (herein referred to as a "back pointer", "pseudo pointer" or "virtual pointer") from the protected element 9₁ to his or her element 9₂ without actually adding or modifying attributes 10 in the protected element 9₁.

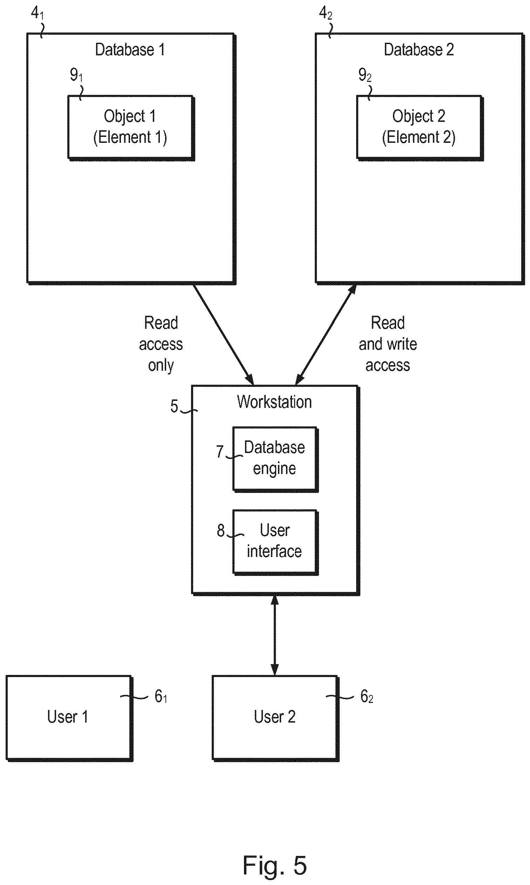

Referring to Figure 5, first and second databases 4₁, 4₂ are shown.

The first database 4₁ includes a first object 9₁ created by a first user 61.

A database engine 7, under the control of the second user 62, has read-only access to the first database 4₁ and has read and write access to the second database 4₂.

The second user 62 uses the database engine 7 to create or modify a second object 9₂ in the second database 42.

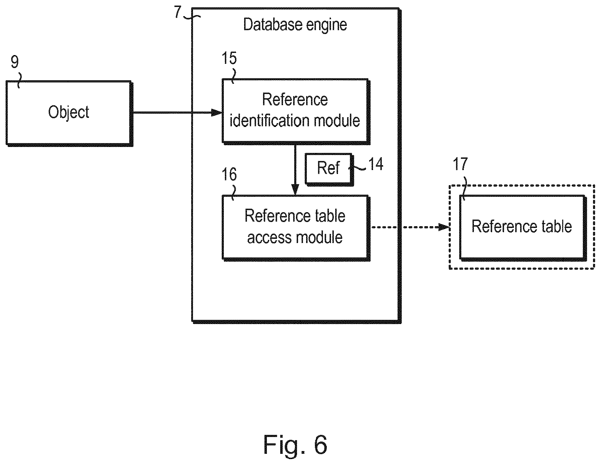

Referring to Figure 6, the database engine 7 includes a first module 15 which is able to identify the reference 14 of a given object 9 and a second module 16 which is able to search reference tables 17 stored in the databases 4 for a reference table 17 which contains pointer information for the given object 9. The second module 16 is able to look up the given object 9 in a reference table 17, i.e. the reference table 17 which contains pointer information for the identified type of object, and present the result as a pseudo attribute.

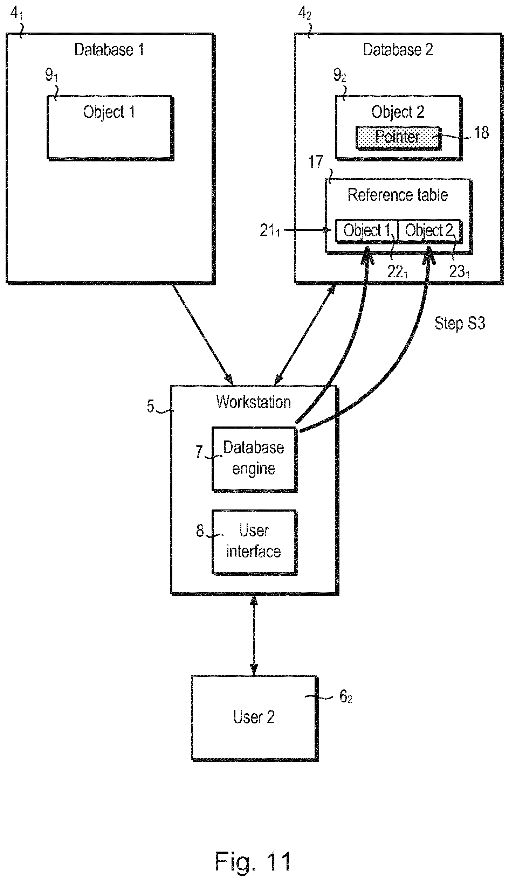

The database engine 7 is able to determine whether an object 9 has a back pointer using the reference table 17 which contains pointer information for objects of type X. A reference table 17 can also contain pointer information for objects of other, different types. Each database 4 can have its own respective reference table 17 which contains pointer information for objects of type X. In this case, a reference table 17 which contains pointer information for the second object 9₂ is stored in the second database 42 (Figure 11).

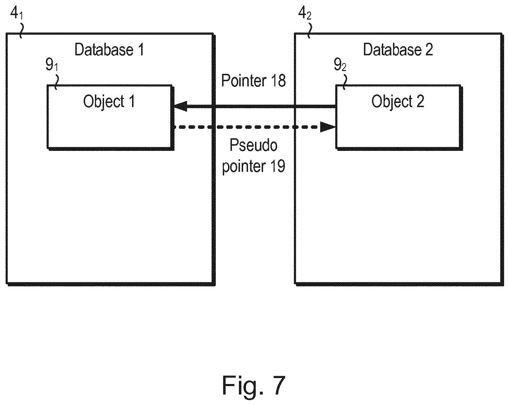

Referring also to Figure 7, the database engine 7 is able to create a real pointer 18 from the second object 9₂ to the first object 9₁. Furthermore, even though the second user 62 does not have permission to modify the first object 9₁, the database engine 7 can create a pseudo pointer 19 from the first object 9₁ to the second object 92.

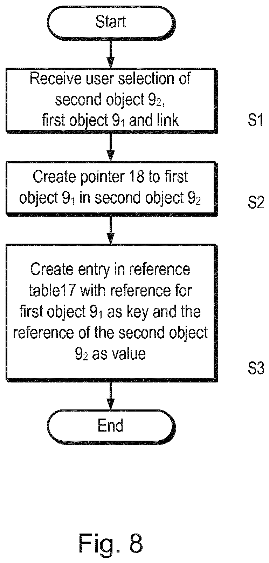

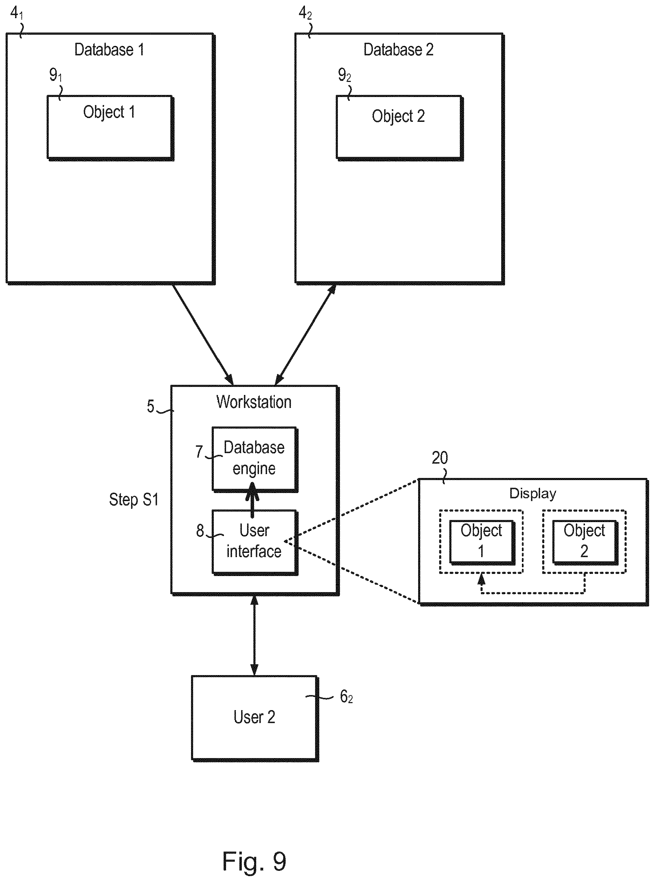

Referring to Figure 8 and to Figures 9 to 12, a process of linking the first and second objects 91, 9₂ will now be described.

The second user 62 creates or modifies a second object 9₂ and links it to the first object 9₁ using the user interface 8.

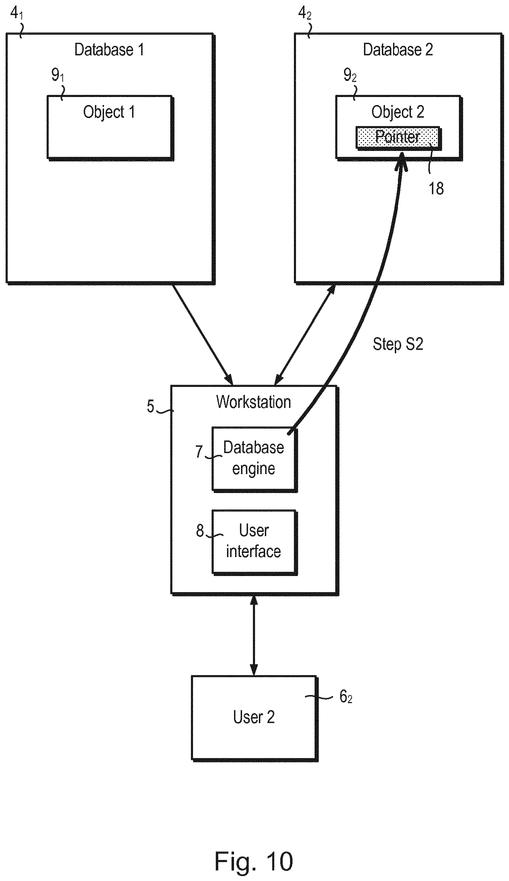

The selection of the second object 9₂ and the first object 9₁ is received by the database engine 7 (step S1) which adds, to the second object 9₂, a pointer 18 to the first object 9₁ (step S2). In particular, the database engine 7 sets the value 11 (Figure 2) of an attribute 10 (Figure 10) in the second object 9₂ to be the reference (for example, in the form of a 32-bit number) for the second object 9₂. The database engine 7 creates an entry 21₁ in the look up table 17 in the second database 4₂ which identifies the first object 91 and the second object 9₂ (step S3). In particular, the entry 21₁ includes the references for the first and second objects 9₁, 9₂. The entry 21₁ is indexed using the first object 9₁.

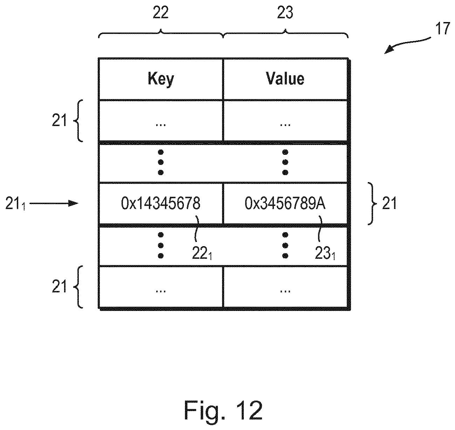

Referring to Figure 12, the look up table 17 is shown in more detail.

The table 17 contains one or more key/value pairs 21 comprising a key 22 and a value 23. The key 22 consists of the identifier (for example, a 32-bit address) of the object 9 being point to. Thus, in this case, the key 22₁ consists of the identifier of the first object 9₁. The value 23 consists of the identifier (for example, a 32-bit address) of the object 9 with the real pointer. Thus, in this case, the value 23₁ consists of the identifier of the second object 9₂. The table will contain all such settings for that database.

The table 17 is ordered by the identity of objects 9 being pointed to. Thus, given the identity of an object, in this case the identity of the first object 9₁, the entry 21₁ can be quickly found.

The second object 9₂ is now linked to the first object 9₁. The link is bi-directional. Thus, if the database engine 7 queries the second object 9₂, then the pointer 18 will indicate a link with the first object 9₁ and so the database engine 7 can query and/or retrieve the first object 9₁. Furthermore, if the database engine 7 queries the first object 9₁, the pseudo pointer 19 will indicate a link with the second object 9₂ and so the database engine 7 can query and/or retrieve the first object 9₂. The database engine 7 can do this despite the fact that the first object 9₁ has not been updated or modified.

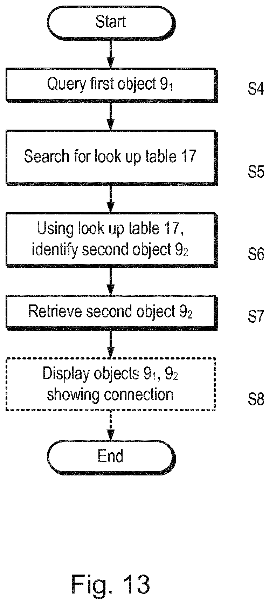

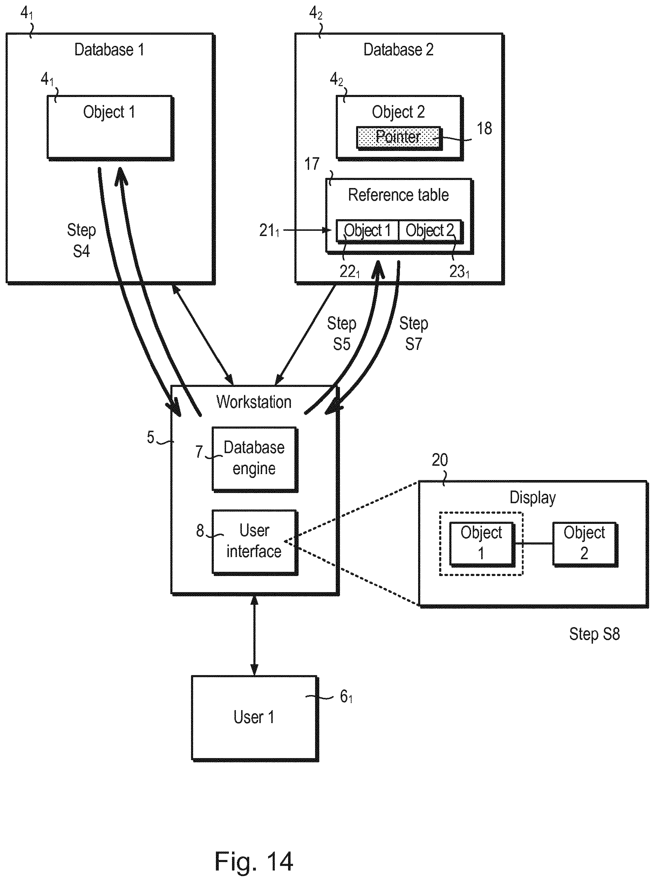

Referring to Figure 9 and to Figures 13 and 14, a process of querying the first object 9₁ will now be described. In this case, the first user 61 conducts the query using the workstation 5. However, any user, including the second user 62, using any other workstation 5 connected to the databases 4 could conduct the query.

The database engine 7 queries the first object 9₁ and returns its attributes (step S4). The database engine 7 searches the databases 4 (Figure 1) for look up tables 17 using the reference 14 (Figure 3) of the first object 9₁ (step S5). For example, the database engine 7 searches the reference table 17 in the second database 4₂. If there are no entries for the first object 9₁ in the in the second database 4₂, then there is no pseudo pointer for objects 9 stored in the second database 4₂. However, if there is an entry 21₁ corresponding to the first object 9₁, then the database engine 7 identifies and retrieves the second object 9₂ (step S7). This can be achieved by extracting the reference 14

(Figure 3) of the second object 9₂. The database engine 7 can display the first and second objects 9₁, 9₂ on display 20 showing the connection (step S8).

Thus, even though the second user 62 has not modified the first object 9₁, he or she is still able to create a pseudo pointer 19 (Figure 7) which tells other users that the second object 92 is connected to the first object 91.

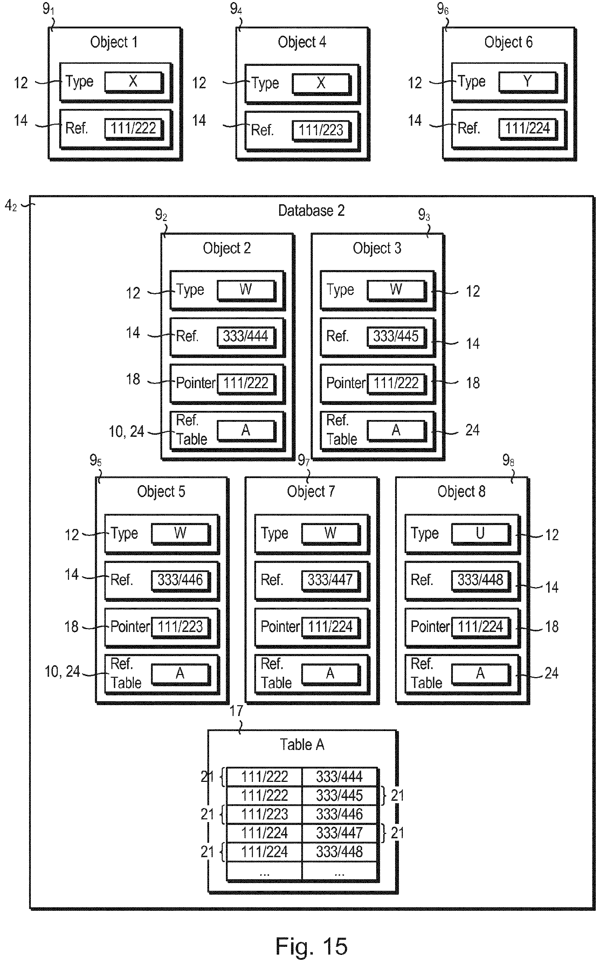

Referring to Figure 15, the second object 9₂ is linked to the reference table 17 using an attribute 24 which identifies, for example points to, the reference table 17. The reference table identifier attribute 24 (or "reference table identifier") takes the form of a p-bit number (for example, p = 32). However, for simplicity, the reference table identifier 24 is labelled herein using a letter, such as, "A".

The reference table 17 can be shared by more than one object 9 (Figure 2) in the same database 4 (Figure 2). Furthermore, the reference table 17 may contain objects 9 of different types.

For example, the multiple database 3 (Figure 1) may hold first, second, third, fourth, fifth, sixth, seventh and eighth objects 9₁, 9₂, 9₃, 9₄, 9₅, 9₆, 9₇, 9₈. The second, third, fifth, seventh and eighth objects 9₂, 9₃, 9₅, 9₇, 9₈ are stored in the second database 4₂. The fourth and sixth objects 9₄, 9₆ may be, but need not be, stored in the first database 4₁.

The third, fourth, fifth, seventh and eighth objects 9₃, 9₄, 9₅, 9₇, 9₈ each include a reference table identifier 24 containing a value, in this case "A", which points to the reference table 17.

The reference table 17 can be used to link objects 9₃, 9₄, 9₅, 9₇, 9₈ in the second database 42 to other objects 9₁, 9₄, 9₆ which may be of different types, for example object type X and object type Y. The other objects 9₁, 9₄, 9₆ may be stored in any database.

During the process of linking the first and second objects 9₁, 9₂, the database engine 7 (Figure 5) adds, to the second object 9₂, the table reference identifier 24.

It will be appreciate that more or fewer objects may be stored in the multiple database 3, that other identifiers can be used and that the objects can be linked differently. Each database 4 (Figure 1) can include one or more look up tables 17. For example, the first database 41 (Figure 5) may include a look up table 17. Such a look up table 17 can allow the first user 61 (Figure 5) to modify the first object 9₁ by linking it with another object 9. It can even allow the first user 61 (Figure 5) to modify the first object 9₁ by linking it with the second object 9₂ independent of any existing link made by the second user 6₂ (Figure 5).

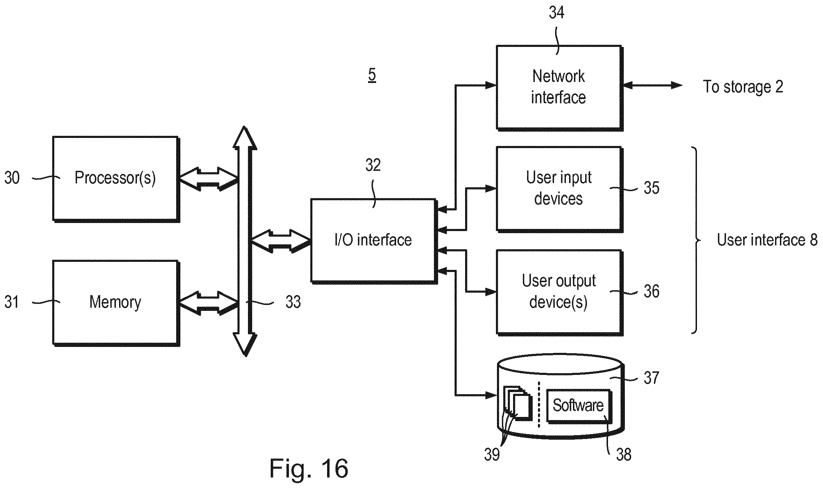

Referring to Figure 16, each workstation 5 takes the form of a computer system which includes one or more processors 30, memory 31 and an input/output (I/O) interface 32 operatively connected by a bus 33. The I/O interface 32 is operatively connected to a network interface 34, user input devices 35 (such as a keyboard and mouse) and user output device(s) 36, such as one or more displays 20 (Figure 9) which provides the user interface 8 and local storage 37 in the form of a one or more hard disc drives or solid-state drives. The database engine 7 is implemented in software. Computer code 38 for implementing the database engine 7 is stored in storage 37 and loaded into memory 31 for execution by the processor(s) 30. Storage 37 can also hold local copies 39 of objects 9 (Figure 2) from one or more databases 4.

It will be appreciated that many modifications may be made to the embodiments hereinbefore described.

For example, an object 9 (Figure 4) may be downloaded from storage 2 (Figure 1) to the workstation 5 and cached. The database engine 7 may work on a local copy 39 of the object 9 (Figure 4) instead of the object 9 (Figure 4) in storage 2. Downloading may occur when the user 6 needs the object 9 (Figure 4). Updated local copies of the objects may be uploaded from local storage 37 to storage 2 when a user 6 commits to a change.

The pointer 18 in the second object 92 (Figure 1) need not point directly to the first object 9₁. The pointer 18 in the second object 9₂ may point to a look up table, such as the reference table 17, which contains a pointer to the first object 9₁.

## Claims

1. A computer-implemented method comprising:
• linking first and second objects (9₁, 9₂) stored in first and second respective databases (4₁, 4₂) wherein the first object (9₁) is created by a first user (6₁) having read-and-write access to the first database and read-only access to the second database and the second object is created by a second, different user (6₂) having read-only access to the first database and read-and-write access to the second database, the first object comprising a plurality of attributes (10) including a reference (14) identifying the first object (9₁),
wherein the linking comprises a database engine (7), under the control of the second user (62):
receiving a selection linking the first and second objects (9₁, 9₂); and
creating an entry (21₁) for the first object (9₁) in a look up table (17) in the second database (4₂) using the reference, the entry including, as a first reference (22₁) identifying the first object (9₁), the reference, and a second reference (23₁) identifying the second object (9₂);
so as to indicate that the second object is linked to the first object when the first object is queried, even though the second user cannot update the first object;
wherein the method further comprises:
• database querying,
wherein the querying comprises a database engine (7), under the control of a user (6₁, 6₂):
querying the first object (9₁) stored in the first database;
obtaining the reference (14) for the first object;
searching for the entry (21₁) in the look up table (17) using the reference (14);
in response to finding the entry in the look up table, retrieving the second reference (23₁) identifying the second object (92);
retrieving the second object (9₂) from the second database; and
displaying the first and second objects (9₁, 9₂) on a display (20);
so as to indicate that the second object is linked to the first object.

2. A method according to claim 1, further comprising setting a pointer (18) in the second object (9₂) to point to the first object (91).

3. A method according to claim 1 or 2, further comprising:
downloading, from remote storage, the first and second objects and the look up table;
storing, in local storage (37), the first and second objects and the look up table.

4. A method according to claim 3, when dependent on claim 2, further comprising:
after setting the pointer (18) in the second object and creating the entry (21₁) in the look up table, uploading, to the remote storage an updated portion of the second object and an updated portion of the look up table.

5. A method according to any preceding claim, wherein the first and second databases (4₁, 4₂) are comprised in a multiple database comprising plural databases arranged hierarchically.

6. A method according to any preceding claim, wherein the first and second objects (9₁, 9₂) correspond to first and second real-world elements and the linking of the first and second objects corresponds to connecting the real-world elements.

7. A method according to claim 6, wherein the first and second objects (9₁, 9₂) correspond to first and second structural elements, equipment elements or pipe elements.

8. A method according to any preceding claim, wherein the first object (9₁) comprises an object type (12) for identifying the first object as being of the given object type.

9. A computer program which when executed by a data processing apparatus causes the data processing apparatus to perform a method according to any preceding claim.

10. A computer readable medium storing a computer program according to claim 9.

11. A computer system for linking first and second objects (9₁, 9₂) stored in first and second respective databases (4₁, 4₂) and for database querying, wherein the first object (9₁) is created by a first user (6₁) having read-and-write access to the first database and read-only access to the second database and the second object is created by a second, different user (6₂) having read-only access to the first database and read-and-write access to the second database, the system comprising:
a database engine (7) configured,
when under the control of the second user (62):
in response to receiving a selection linking the first and second objects (9₁, 9₂), to create an entry (21₁) in a look up table (17) stored in the second database, the entry
including a first reference (22₁) identifying the first object (9₁) and a second reference (23₁) identifying the second object (9₂) so as to indicate that the second object is linked to the first object when the first object is queried, even though the second user cannot update the first object; and
when under the control of a user (6₁, 6₂):
in response to querying the first object (9₁) stored in the first database, to obtain the reference (14) for the first object, to search for the entry (21₁) in the look up table (17) using the reference (14) and, in response to finding the entry in the look up table, to retrieve, the second reference (23₁) identifying the second object (9₂), to retrieve the second object (9₂); and to display the first and second objects (9₁, 9₂) on a display (20) so as to indicate that the second object is linked to the first object.

12. A database system (1) comprising:
storage (2) storing the first and second databases (4₁, 4₂); and
a computer system (5) according to claim 11.

## Patentansprüche

1. Computerimplementiertes Verfahren, umfassend:
• Verknüpfen von einem ersten und einem zweiten Objekt (9₁, 9₂), die in ersten und zweiten jeweiligen Datenbanken (4₁, 4₂) gespeichert sind, wobei das erste Objekt (9₁) von einem ersten Benutzer (6₁) mit Lese- und Schreibzugriff auf die erste Datenbank und Nur-Lese-Zugriff auf die zweite Datenbank erstellt wird und das zweite Objekt von einem zweiten, unterschiedlichen Benutzer (6₂) mit Nur-Lese-Zugriff auf die erste Datenbank und Lese- und Schreibzugriff auf die zweite Datenbank erstellt wird, wobei das erste Objekt eine Vielzahl von Attributen (10) umfasst, die eine Referenz (14) umfassen, die das erste Objekt (9₁) identifiziert,
wobei die Verknüpfung eine Datenbank-Engine (7) umfasst, die unter der Steuerung des zweiten Benutzers (6₂):
eine Auswahl empfängt, die das erste und das zweite Objekt (9₁, 9₂) verknüpft; und
einen Eintrag (21₁) für das erste Objekt (9₁) in einer Nachschlagetabelle (17) in der zweiten Datenbank (4₂) unter Verwendung der Referenz erstellt, wobei der Eintrag als eine erste Referenz (22₁), die das erste Objekt (9₁) identifiziert, die Referenz und eine zweite Referenz (23₁), die das zweite Objekt (9₂) identifiziert, umfasst;
um anzuzeigen, dass das zweite Objekt mit dem ersten Objekt verknüpft ist, wenn das erste Objekt abgefragt wird, selbst wenn der zweite Benutzer das erste Objekt nicht aktualisieren kann;
wobei das Verfahren ferner umfasst:
• Datenbankabfragen,
wobei das Abfragen eine Datenbank-Engine (7) umfasst, die unter der Steuerung eines Benutzers (6₁, 6₂):
das in der ersten Datenbank gespeicherte erste Objekt (9₁) abfragt;
die Referenz (14) für das erste Objekt erhält;
nach dem Eintrag (21₁) in der Nachschlagetabelle (17) unter Verwendung der Referenz (14) sucht;
als Reaktion auf das Finden des Eintrags in der Nachschlagetabelle die zweite Referenz (23₁) abruft, die das zweite Objekt (9₂) identifiziert;
das zweite Objekt (9₂) aus der zweiten Datenbank abruft; und
das erste und zweite Objekte (9₁, 9₂) auf einer Anzeige (20) anzeigt;
um anzuzeigen, dass das zweite Objekt mit dem ersten Objekt verknüpft ist.

2. Verfahren nach Anspruch 1, ferner umfassend das Setzen eines Zeigers (18) in dem zweiten Objekt (9₂), um auf das erste Objekt (9₁) zu zeigen.

3. Verfahren nach Anspruch 1 oder 2, ferner umfassend:
Herunterladen des ersten und zweiten Objekts und der Nachschlagetabelle aus einem entfernten Speicher;
Speichern des ersten und zweiten Objekts und der Nachschlagetabelle in einem lokalen Speicher (37).

4. Verfahren nach Anspruch 3, sofern von Anspruch 2 abhängig, ferner umfassend:
nach dem Setzen des Zeigers (18) in das zweite Objekt und Erzeugen des Eintrags (21₁) in die Nachschlagetabelle, Hochladen eines aktualisierten Abschnitts des zweiten Objekts und eines aktualisierten Abschnitts der Nachschlagetabelle in den entfernten Speicher.

5. Verfahren nach einem der vorhergehenden Ansprüche, wobei die erste und die zweite Datenbank (4₁, 4₂) in einer Mehrfachdatenbank enthalten sind, die mehrere hierarchisch angeordnete Datenbanken umfasst.

6. Verfahren nach einem der vorhergehenden Ansprüche, wobei das erste und das zweite Objekt (9₁, 9₂) ersten und zweiten realen Elementen entsprechen und das Verknüpfen des ersten und zweiten Objekts dem Verbinden der realen Elemente entspricht.

7. Verfahren nach Anspruch 6, wobei das erste und das zweite Objekt (9₁, 9₂) ersten und zweiten Strukturelementen, Ausrüstungselementen oder Rohrelementen entsprechen.

8. Verfahren nach einem der vorhergehenden Ansprüche, wobei das erste Objekt (9₁) einen Objekttyp (12) zum Identifizieren des ersten Objekts als von dem gegebenen Objekttyp umfasst.

9. Computerprogramm, das, wenn es von einer Datenverarbeitungsvorrichtung ausgeführt wird, bewirkt, dass die Datenverarbeitungsvorrichtung ein Verfahren nach einem der vorhergehenden Ansprüche ausführt.

10. Computerlesbares Medium, das ein Computerprogramm nach Anspruch 9 speichert.

11. Computersystem zum Verknüpfen von einem ersten und einem zweiten Objekt (9₁, 9₂), die in ersten und zweiten jeweiligen Datenbanken (4₁, 4₂) und zum Datenbankabfragen gespeichert sind, wobei das erste Objekt (9₁) von einem ersten Benutzer (6₁) mit Lese- und Schreibzugriff auf die erste Datenbank und Nur-Lese-Zugriff auf die zweite Datenbank erstellt wird und das zweite Objekt von einem zweiten, unterschiedlichen Benutzer (6₂) mit der Nur-Lese-Zugriff auf die erste Datenbank und Lese- und Schreibzugriff auf die zweite Datenbank erstellt wird, wobei das System umfasst:
eine Datenbank-Engine (7), die konfiguriert ist, um,
wenn Sie unter der Steuerung des zweiten Benutzers (6₂) ist:
als Reaktion auf das Empfangen einer Auswahl, die das erste und das zweite Objekt (9₁, 9₂) verknüpft, einen Eintrag (21₁) in einer in der zweiten Datenbank gespeicherten Nachschlagetabelle (17) zu erstellen, wobei der
Eintrag
eine erste Referenz (22₁), die das erste Objekt (9₁) identifiziert, und eine zweite Referenz (23₁), die das zweite Objekt (9₂) identifiziert, umfasst, um anzuzeigen, dass das zweite Objekt mit dem ersten Objekt verknüpft ist, wenn das erste Objekt abgefragt wird, selbst wenn der zweite Benutzer das erste Objekt nicht aktualisieren kann; und,
wenn sie unter der Steuerung eines Benutzers (6₁, 6₂) ist:
als Reaktion auf das Abfragen des in der ersten Datenbank gespeicherten ersten Objekts (9₁) die Referenz (14) für das erste Objekt zu erhalten, nach dem Eintrag (21₁) in der Nachschlagetabelle (17) unter Verwendung der Referenz (14) zu suchen und als Reaktion auf das Finden des Eintrags in der Nachschlagetabelle die zweite Referenz (23₁), die das zweite Objekt (9₂) identifiziert, abzurufen, das zweite Objekt (9₂) abzurufen; und das erste und das zweite Objekt (9₁, 9₂) auf einer Anzeige (20) anzuzeigen, um anzuzeigen, dass das zweite Objekt mit dem ersten Objekt verknüpft ist.

12. Datenbanksystem (1), umfassend:
Speicher (2), der die erste und zweite Datenbank (4₁, 4₂) speichert; und
ein Computersystem (5) nach Anspruch 11.

## Revendications

1. Procédé mis en œuvre par ordinateur comprenant :
• la liaison de premier et deuxième objets (9₁, 9₂) stockés dans des première et deuxième bases de données respectives (4₁, 4₂) dans lequel le premier objet (9₁) est créé par un premier utilisateur (6₁) ayant un accès en lecture et en écriture à la première base de données et un accès en lecture seule à la deuxième base de données et le deuxième objet est créé par un deuxième utilisateur (6₂) différent ayant un accès en lecture seule à la première base de données et un accès en lecture et en écriture à la deuxième base de données, le premier objet comprenant une pluralité d'attributs (10) comprenant une référence (14) identifiant le premier objet (9₁),
dans lequel la liaison comprend un moteur de base de données (7), sous le contrôle du deuxième utilisateur (6₂) :
la réception d'une sélection liant les premier et deuxième objets (9₁, 9₂) ; et
la création d'une entrée (21₁) pour le premier objet (9₁) dans une table de consultation (17) dans la deuxième base de données (4₂) en utilisant la référence, l'entrée comprenant, en tant que première référence (22₁) identifiant le premier objet (9₁), la référence, et une deuxième référence (23₁) identifiant le deuxième objet (9₂) ;
de manière à indiquer que le deuxième objet est lié au premier objet lorsque le premier objet est interrogé, même si le deuxième utilisateur ne peut pas mettre à jour le premier objet ;
dans lequel ledit procédé comprend en outre :
• l'interrogation de la base de données,
dans lequel l'interrogation comprend un moteur de base de données (7), sous le contrôle d'un utilisateur (6₁, 6₂) :
l'interrogation du premier objet (9₁) stocké dans la première base de données ;
l'obtention de la référence (14) pour le premier objet ;
la recherche de l'entrée (21₁) dans la table de consultation (17) en utilisant la référence (14) ;
en réponse à la recherche de l'entrée dans la table de consultation, la récupération de la deuxième référence (23₁) identifiant le deuxième objet (9₂) ;
la récupération du deuxième objet (9₂) à partir de la deuxième base de données ; et
l'affichage des premier et deuxième objets (9₁, 9₂) sur un affichage (20) ;
de manière à indiquer que le deuxième objet est lié au premier objet.

2. Procédé selon la revendication 1, comprenant en outre l'établissement d'un pointeur (18) dans le deuxième objet (9₂) pour pointer vers le premier objet (9₁).

3. Procédé selon la revendication 1 ou 2, comprenant en outre :
le téléchargement, à partir d'un stockage distant, des premier et deuxième objets et de la table de consultation ;
le stockage, dans un stockage local (37), des premier et deuxième objets et de la table de consultation.

4. Procédé selon la revendication 3, lorsqu'elle dépend de la revendication 2, comprenant en outre :
après l'établissement du pointeur (18) dans le deuxième objet et la création de l'entrée (211) dans la table de consultation, le téléchargement, vers le stockage distant d'une partie mise à jour du deuxième objet et d'une partie mise à jour de la table de consultation.

5. Procédé selon l'une quelconque des revendications précédentes, dans lequel les première et deuxième bases de données (4₁, 4₂) sont comprises dans une base de données multiple comprenant plusieurs bases de données agencées hiérarchiquement.

6. Procédé selon l'une quelconque des revendications précédentes, dans lequel les premier et deuxième objets (9₁, 9₂) correspondent à des premier et deuxième éléments du monde réel et la liaison des premier et deuxième objets correspond à la connexion des éléments du monde réel.

7. Procédé selon la revendication 6, dans lequel les premier et deuxième objets (9₁, 9₂) correspondent à des premier et deuxième éléments structurels, éléments d'équipement ou éléments de canalisation.

8. Procédé selon l'une quelconque des revendications précédentes, dans lequel le premier objet (9₁) comprend un type d'objet (12) pour identifier le premier objet comme étant du type d'objet donné.

9. Programme informatique qui, lorsqu'il est exécuté par un appareil de traitement de données, amène l'appareil de traitement de données à exécuter un procédé selon l'une quelconque des revendications précédentes.

10. Support lisible par ordinateur stockant un programme informatique selon la revendication 9.

11. Système informatique pour lier des premier et deuxième objets (9₁, 9₂) stockés dans des première et deuxième bases de données respectives (4₁, 4₂) et pour interroger une base de données, dans lequel le premier objet (9₁) est créé par un premier utilisateur (6₁) ayant un accès en lecture et en écriture à la première base de données et un accès en lecture seule à la deuxième base de données et le deuxième objet est créé par un deuxième utilisateur différent (6₂) ayant un accès en lecture seule à la première base de données et un accès en lecture et en écriture à la deuxième base de données, le système comprenant :
un moteur de base de données (7) configuré,
lorsqu'il est sous le contrôle du deuxième utilisateur (6₂) :
en réponse à la réception d'une sélection liant les premier et deuxième objets (9₁, 9₂), pour créer une entrée (21₁) dans une table de consultation (17) stockée dans la deuxième base de données, l'entrée comprenant une première référence (22₁) identifiant le premier objet (9₁) et une deuxième référence (23₁) identifiant le deuxième objet (9₂) de manière à indiquer que le deuxième objet est lié au premier objet lorsque le premier objet est interrogé, même si le deuxième utilisateur ne peut pas mettre à jour le premier objet ; et
sous le contrôle d'un utilisateur (6₁, 6₂) :
en réponse à l'interrogation du premier objet (9₁) stocké dans la première base de données, pour obtenir la référence (14) pour le premier objet, pour rechercher l'entrée (21₁) dans la table de consultation (17) en utilisant la référence (14) et, en réponse à la recherche de l'entrée dans la table de consultation, pour récupérer, la deuxième référence (23₁) identifiant le deuxième objet (9₂), pour récupérer le deuxième objet (9₂) ; et pour afficher les premier et deuxième objets (9₁, 9₂) sur un affichage (20) de manière à indiquer que le deuxième objet est lié au premier objet.

12. Système de base de données (1) comprenant :
un stockage (2) stockant les première et deuxième bases de données (4₁, 4₂) ; et
un système informatique (5) selon la revendication 11.
